# EUROPEAN PATENT APPLICATION

(11) **EP 4 607 982 A1**
(43) Date of publication of application: **27.08.2025**
(21) Application number: 22962379.8
(22) Date of filing: 19.10.2022
(51) Int. Cl.: H04W 8/24

(54) **POSITIONING METHOD, AND DEVICES**

(71) Applicant: GUANGDONG OPPO MOBILE TELECOMMUNICATIONS CORP., LTD., Dongguan, Guangdong 523860 (CN)
(72) Inventor: CHEN, Jingran, Dongguan, Guangdong 523860 (CN); GUO, Yali, Dongguan, Guangdong 523860 (CN)
(74) Representative: Penza, Giancarlo
(86) International application number: PCT/CN2022/126280
(87) International publication number: WO 2024/082189

(57) **Abstract**

Provided in the embodiments of the present application are a positioning method, and devices. The positioning method comprises: a terminal device acquiring the position of an electronic tag according to a first positioning request of the electronic tag. The embodiments of the present application can realize positioning of an electronic tag.

## Description

### TECHNICAL FIELD

The present disclosure relates to the field of communications, and particularly relates to a positioning method, and device.

### BACKGROUND

Electronic tags may be used in a variety of scenarios, such as warehousing logistics, item searching. In these scenarios, it is necessary to obtain positions of electronic tags. When the electronic tags are introduced into the mobile communication networks, the mobile communication networks can remotely locate the electronic tags, to enable the third party to accurately acquire the positions of the electronic tags. How to use the mobile communication networks to locate electronic tags is an unsolved problem at present.

### SUMMARY

The embodiments of the present disclosure provide a positioning method and a positioning device capable of positioning an electronic tag.

The embodiment of the present disclosure provides a positioning method, including an operation that a terminal device acquires a position of an electronic tag according to a first positioning request of the electronic tag.

The embodiment of the present disclosure further provides a positioning method, including an operation that a first network device acquires a position of the electronic tag according to a first positioning response of the electronic tag.

The embodiment of the present disclosure further provides a positioning method, including an operation that a second network device verifies the electronic tag and/or a terminal device associated with the electronic tag according to a second positioning request of the electronic tag.

The embodiment of the present disclosure further provides a positioning method, including operations as follows. A sixth network device receives a second positioning response of an electronic tag from a first network device, where the second positioning response carries the position of the electronic tag.

The sixth network device sends a third positioning response of the electronic tag to a second network device, where the third positioning response carries the position of the electronic tag.

The embodiment of the present disclosure further provides a terminal device, including a first acquisition module configured to acquire a position of the electronic tag according to a first positioning request of the electronic tag.

The embodiment of the present disclosure further provides a network device, including a second acquisition module configured to acquire the position of the electronic tag according to a first positioning response of the electronic tag.

The embodiment of the present disclosure further provides a network device, including a verification module configured to verify the electronic tag and/or a terminal device associated with the electronic tag according to a second positioning request of the electronic tag.

The embodiment of the present disclosure further provides a network device, including a fourth reception module and a fourth transmission module.

The fourth reception module is configured to receive a second positioning response of the electronic tag from a first network device, where the second positioning response carries the position of the electronic tag.

The fourth transmission module is configured to transmit a third positioning response of the electronic tag to a second network device, where the third positioning response carries a position of the electronic tag.

The embodiment of the present disclosure further provides a communication device including a processor, a memory, and a transceiver.

The memory is configured to store a computer program, and the processor is configured to invoke and execute the computer program stored in the memory and control the transceiver to cause the device to perform the above-described positioning method.

The embodiment of the present disclosure further provides a chip for implementing the above-described positioning method.

Specifically, the chip includes a processor for invoking and executing a computer program from a memory, to enable a device on which the chip is mounted to perform the above-described positioning method.

The embodiment of the present disclosure further provides a computer-readable storage medium for storing a computer program that causes a computer to perform the above-described positioning method.

The embodiment of the present disclosure further provides a computer program product including computer program instructions that cause a computer to perform the above-described positioning method.

The embodiment of the present disclosure further provides a computer program causes a computer to perform the above-described positioning method when the computer program is run on the computer.

In the embodiment of the present disclosure, the terminal device obtains the position of the electronic tag according to the first positioning request of the electronic tag, to position the electronic tag.

### BRIEF DESCRIPTION OF THE DRAWINGS

FIG. 1 is a first schematic diagram of an application scenario according to an embodiment of the present disclosure.
FIG. 2 is a second schematic diagram of an application scenario according to an embodiment of the present disclosure.
FIG. 3 is a third schematic diagram of an application scenario according to an embodiment of the present disclosure.
FIG. 4 is a schematic flowchart of a positioning method 400 according to an embodiment of the present disclosure.
FIG. 5 is a schematic flowchart of a positioning method 500 according to an embodiment of the present disclosure.
FIG. 6 is a schematic flowchart of a positioning method 600 according to an embodiment of the present disclosure.
FIG. 7 is a schematic flowchart of a positioning method 700 according to an embodiment of the present disclosure.
FIG. 8 is a schematic flowchart of a first embodiment of the present disclosure.
FIG. 9 is a schematic flowchart of a second embodiment of the present disclosure.
FIG. 10 is a schematic flowchart of a third embodiment of the present disclosure.
FIG. 11 is a schematic flowchart of a fourth embodiment of the present disclosure.
FIG. 12 is a schematic flowchart of a positioning method 1200 according to an embodiment of the present disclosure.
FIG. 13 is a schematic structural diagram of a terminal device 1300 according to an embodiment of the present disclosure.
FIG. 14 is a schematic structural diagram of a terminal device 1400 according to an embodiment of the present disclosure.
FIG. 15 is a schematic structural diagram of a network device 1500 according to an embodiment of the present disclosure.
FIG. 16 is a schematic structural diagram of a network device 1600 according to an embodiment of the present disclosure.
FIG. 17 is a schematic structural diagram of a network device 1700 according to an embodiment of the present disclosure.
FIG. 18 is a schematic structural diagram of a network device 1800 according to an embodiment of the present disclosure.
FIG. 19 is a schematic structural diagram of a network device 1900 according to an embodiment of the present disclosure.
FIG. 20 is a schematic structural diagram of a network device 2000 according to an embodiment of the present disclosure.
FIG. 21 is a schematic structural diagram of a communication device 2100 according to an embodiment of the present disclosure.
FIG. 22 is a schematic structural diagram of a chip 2200 according to an embodiment of the present disclosure.

### DETAILED DESCRIPTION

Hereinafter, the technical solutions in the embodiments of the present disclosure will be described with reference to the accompanying drawings in the embodiments of the present disclosure.

It should be noted that the terms "first", "second" and the like in the specification of the embodiments of the present disclosure, claims and in the above-described drawings are used to distinguish similar objects, and do not describe a specific order or sequence. The objects described by the "first" and the "second" may be the same or different.

The technical solution of the embodiments of the present disclosure may be applied to various communication systems, such as a global system of mobile communication (GSM) system, a code division multiple access (CDMA) system, and a wideband code division multiple access (WCDMA) system, general packet radio service (GPRS), a long term evolution (LTE) system, an advanced long term evolution (LTE-A) system, a new radio (NR) system, an evolution system of NR system, an LTE-based access to unlicensed spectrum (LTE-U) system, a NR-based access to unlicensed spectrum (NR-U) system, a non-terrestrial networks (NTN) system, a universal mobile telecommunication system (UMTS), a wireless local area networks (WLAN), a wireless fidelity (WiFi), a 5th generation mobile communication technology (5G) system or other communication system, etc.

Generally, conventional communication systems support a limited number of connections and are easy to implement. However, with the development of communication technology, mobile communication systems will support not only conventional communication, but also, for example, device to device (D2D) communication, machine to machine (M2M) communication, machine type communication (MTC), vehicle to vehicle (V2V) communication, or vehicle to everything (V2X) communication, etc. The embodiments of the present disclosure can also be applied to these communication systems.

In an embodiment, the communication system in the embodiment of the present disclosure may be applied to a carrier aggregation (CA) scenario, a dual connectivity (DC) scenario, or a standalone (SA) network deployment scenario.

In an embodiment, the communication system according to the embodiment of the present disclosure can be applied to an unlicensed spectrum, and the unlicensed spectrum can also be considered as a shared spectrum; alternatively, the communication system in the embodiment of the present disclosure may also be applied to a licensed spectrum, and the licensed spectrum may also be regarded as an unshared spectrum.

The embodiments of the present disclosure describe various embodiments in conjunction with a network device and a terminal device. The terminal device may also be referred to as a user equipment (UE), an access terminal, a subscriber unit, a subscriber station, a mobile station, a mobile terminal, a remote station, a remote terminal, a mobile device, a user terminal, a terminal, a wireless communication device, a user agent or a user device, and the like.

The terminal device may be a station (ST) in a WLAN, a cell telephone, a cordless telephone, a session initiation protocol (SIP) telephone, a wireless local loop (WLL) station, a personal digital assistant (PDA) device, a handheld device or a computing device having wireless communication capabilities, other processing device connected to a wireless modem, a vehicle-mounted device, a wearable device, a terminal device in a next generation communication system such as an NR network, or a terminal device in a future evolved public land mobile network (PLMN) network.

In an embodiment of the present disclosure, the terminal device may be deployed on land, including indoor or outdoor, or may be handheld, wearable, or vehicle-mounted. The terminal device may also be deployed on the water (such as ships, etc.), or may also be deployed in the air (e.g. on aircraft, balloons and satellites, etc.).

In an embodiment of the present disclosure, the terminal device may be a mobile phone, a Pad, a computer having a wireless transceiver function, a virtual reality (VR) terminal device, or an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, and the like.

The terminal device may be for example, a wearable device in an embodiment of the present disclosure, however, the terminal device is mot limited thereto. The wearable devices can also be called wearable smart devices, which are a general term for applying wearable technology to intelligently design daily wear and develop wearable devices, such as glasses, gloves, watches, clothing and shoes. The wearable devices are portable devices that is worn directly on the body or integrated into the user's clothes or accessories. The wearable devices are not only hardware devices, but also realize powerful functions through software support, data interaction and cloud interaction. The generalized wearable smart devices include, for example, smart watches or smart glasses which have full functions, large size, and can realize complete or partial functions without relying on smart phones, and include for example various smart bracelets and smart jewelry for physical sign monitoring, which only have a certain type of application functions and need to be used in conjunction with other devices such as smart phones.

In an embodiment of the present disclosure, the network device may be a device for communicating with a mobile device, the network device may be an access point (AP) in the WLAN, a base transceiver station (BTS) in the GSM or CDMA, a NodeB (NB) in the WCDMA, an evolutional Node B (eNB or eNodeB) in the LTE, a relay station or an AP, a vehicle-mounted device, a wearable device, a network device (such as next generation NodeB, gNB) in an NR network, a network device in a future evolved PLMN network, or a network device in an NTN network or the like.

The network device may have mobile characteristics in embodiments of the present disclosure, and the network device may be for example, but is not limited to a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station located on a land, a water area or the like.

In the embodiment of the present disclosure, the network device may provide services for the cell, the terminal device communicates with the network device through transmission resources (e.g., frequency domain resources, or spectrum resources) used by the cell, the cell may be a cell corresponding to the network device (e.g., base station), and the cell may belong to a macro base station or a base station corresponding to a small cell, the small cell may include a metro cell, a micro cell, a pico cell, a femto cell, and the like. These small cells have the characteristics of small coverage and low transmission power, and are suitable for providing high-speed data transmission services.

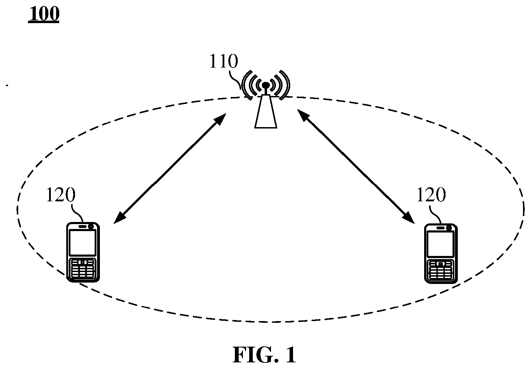

FIG. 1 exemplarily illustrates a communication system 100. The communication system includes a network device 110 and two terminal devices 120. In an embodiment, the communication system 100 may include multiple network devices 110, and the coverage range of each network device 110 may include another number of terminal devices 120, which is not limited in the embodiment of the present disclosure.

In an embodiment, the communication system 100 may further include other network entities such as a mobility management entity (MME), an access and mobility management function (AMF), and the like, which is not limited in the embodiment of the present disclosure.

The network device may further include an access network device and a core network device. That is, the wireless communication system further includes multiple core networks for communicating with the access network device. The access network device may be an evolutional node B (referred to as eNB or e-NodeB) macro base station, a micro base station (also referred to as a "small base station"), a pico base station, an access point (AP), a transmission point (TP) or a new generation Node B (gNodeB) or the like in a long-term evolution (LTE) system, a next radio (NR) system or an authorized auxiliary access long-term evolution (LAA-LTE) system.

It should be understood that a device having a communication function in the network/system in the embodiment of the present disclosure may be referred to as a communication device. Taking the communication system shown in FIG. 1 as an example, the communication device may include a network device and a terminal device having a communication function, and the network device and the terminal device may be specific devices in the embodiment of the present disclosure, which is not described herein. The communication device may also include other devices in the communication system, for example other network entities such as a network controller and a mobility management entity, which is not limited in the embodiments of the present disclosure.

It should be understood that the terms "system" and "network" herein are often used interchangeably herein. Herein, the term "and/or" herein is only an association relationship describing association objects, and means that there may be three relationships. For example, A and/or B may mean that A alone exists, A and B simultaneously exist, and B alone exists. In addition, the character "/" herein generally indicates that the related objects before and after are in an "or" relationship.

It should be understood that the "indication" mentioned in the embodiments of the present disclosure may be a direct indication, an indirect indication, or an associated relationship. For example, A indicating B may mean that A directly indicates B, for example, B can be acquired by A, and may also mean that A indicates B indirectly, for example A indicates C, and B can be acquired through C, and may also indicate that there is an association relationship between A and B.

In the description of the embodiments of the present disclosure, the term "correspondence" may indicate that there is a direct correspondence or indirect correspondence between the two objects, there is an association relationship between the two objects, or there is a relationship between indicating and being indicated, configuring and being configured, or the like.

In order to facilitate understanding of the technical solutions of the embodiments of the present disclosure, the related technologies of the embodiments of the present disclosure are be described below, and the related technologies below may be, as optional solutions, arbitrarily combined with the technical solutions of the embodiments of the present disclosure, and all of them belong to the scope of protection of the embodiments of the present disclosure.

The 5th Generation Mobile Communication Technology (5G) network system architecture is described as follows.

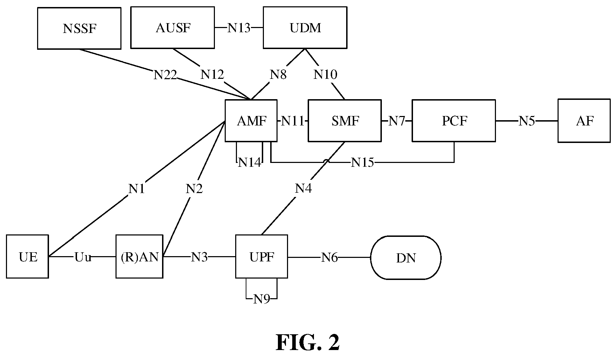

The architecture of the 5G network system is shown in FIG. 2. The UE performs access layer connection with the AN through the Uu interface to exchange access layer messages and perform wireless data transmission, and the UE performs non-access stratum (NAS) connection with the AMF through the N1 interface to exchange NAS messages. The AMF is a mobility management function in the core network, and the SMF is a session management function in the core network. In addition to the mobility management of the UE, the AMF is also responsible for forwarding messages related to the session management between the UE and the SMF. The PCF, as a policy control function in the core network, is responsible for formulating policies related to mobility management, session management, billing, etc. for UE. The UPF is a user plane function in the core network, and transmits data to the external data network through the N6 interface and transmits data to the AN through the N3 interface. After the UE accesses the 5G network through the Uu interface, the UE establishes a PDU session for data transmission under the control of the SMF.

The electronic tag is described as follows.

In a radio frequency identification (RFID) system, a reader-writer is a device that reads information from an electronic tag or writes information to the electronic tag. When the RFID system operates, the reader-writer sends radio frequency energy in an area to form an electromagnetic field, and the size of the area depends on the transmission power. The electronic tags within the coverage area of the reader-writer are triggered to send data stored therein or modify the data stored therein according to an instruction of the reader-writer. The reader-writer performs contactless bi-directional data communication with the electronic tag through wireless radio frequency, and reads and writes the electronic tag, to achieve target identification and data exchange. Electronic tags generally consume less electricity, and even are not connected to the power supply or the battery. For example, passive electronic tags can be powered for a short time by receiving microwave signals transmitted by the reader-writer and obtaining energy through electromagnetic induction coils, to implement information exchange. The RFID has a short transmission range and may be applied to local management and communication of items, such as item management in warehouses, file management, door card management, highway electronic payment, etc.

A new electronic tag is considered to be designed in the 3rd generation partnership project (3GPP) network, which is called a passive internet of things (IoT) tag or an ambient IoT tag. Unlike the RFID, the electronic tag can use the frequency resources of the 3GPP network for communication. Electronic tags in the present disclosure include, but are not limited to, RFID tags, passive IoT tags, and ambient IoT tags.

The electronic tags can be used in a variety of scenarios, such as warehousing logistics, item search, etc. In these scenarios, it is necessary to obtain the positions of electronic tags. When the electronic tag is introduced into the 3GPP network, the 3GPP network can be used to remotely locate the electronic tag, so that the third party can accurately know the position of the electronic tag. How to use 3GPP network to locate electronic tags is an unsolved problem at present.

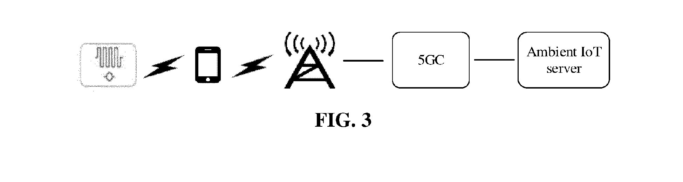

FIG. 3 is a schematic diagram of an application scenario according to an embodiment of the present disclosure, in which an electronic tag is connected to a network through an indirect mode, and the architecture of the indirect mode is shown in FIG. 3. The electronic tag is connected to the base station through a terminal, and the electronic tag interacts data with the server through the terminal, the base station and the core network. The reader-writer function for the electronic tag may be added to the terminal, and the terminal may collect and send information of the electronic tag to the core network. A network element having storage function or a special network element in the core network stores an association relationship between an identification of the UE and an identification of the electronic tag.

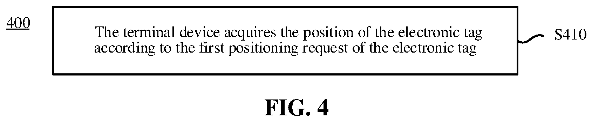

The embodiment of the present disclosure provides a positioning method, which can be used for positioning an electronic tag. FIG. 4 is a schematic flowchart of a positioning method 400 according to an embodiment of the present disclosure, and the method can be applied to any one of the systems shown in FIGs. 1 to 3, but is not limited thereto. The method includes at least part of operation S410.

At S410, the terminal device acquires a position of the electronic tag according to a first positioning request of the electronic tag.

The terminal device acquires the position of the electronic tag according to the first positioning request, to position the electronic tag by a mobile network (such as a 5G network).

The terminal device may receive a first positioning request from a first network device, and the first positioning request may carry an identification (ID) of the electronic tag and may also carry an ID of the terminal device. The ID of the electronic tag may be denoted as a Tag ID, and the ID of the terminal device may be denoted as a UE ID. The position of the electronic Tag may also be referred to as position information of the electronic Tag, position of the Tag ID, position information of the Tag ID, or the like.

Since the terminal device has a reader-writer function of the electronic tag, the terminal device can read and write the electronic tag connected thereto and determine the position of the electronic tag connected thereto. Since the ID of the electronic tag is carried in the first positioning request, the terminal device can determine the position of the electronic tag according to the ID of the electronic tag.

Since the UE ID is included in the first positioning request, the terminal device that receives the first positioning request can determine whether the first positioning request is sent to the terminal device by comparing the UE ID in the first positioning request and its own ID, to avoid mis-operation of positioning the electronic tag caused by errors in the process of message transmission and the like. For example, if the UE ID carried in the first positioning request is the same with the ID of the terminal device, the first positioning request is sent to the terminal device, and the terminal device may determine the position of the electronic tag according to the first positioning request. If the UE ID carried in the first positioning request is different from the ID of the terminal device, the first positioning request is not sent to the terminal device, and the terminal device does not perform positioning of the electronic tag.

In some embodiments, the first network device may be a location management function (LMF), a gateway mobile position center (GMLC), an AMF, or other network element.

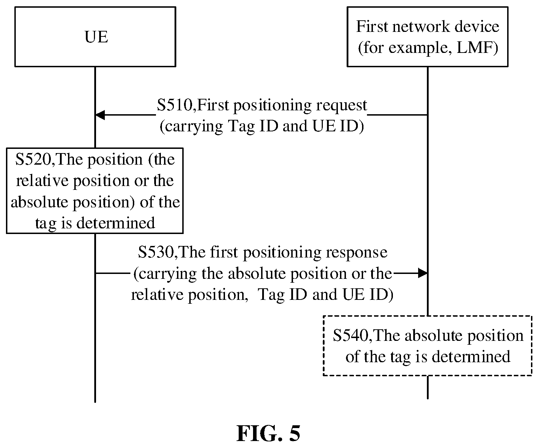

FIG. 5 is a schematic flowchart of a positioning method 500 according to an embodiment of the present disclosure, and FIG. 5 illustrates a message interaction process between a terminal device and a first network device, and a flow in which the terminal device and the first network device acquire a position of an electronic tag. FIG. 5 includes the following operations S510 to S540.

At S510, the terminal device receives a first positioning request from the first network device, and the first positioning request may carry a Tag ID and/or a UE ID.

At S520, the terminal device determines a position of the electronic tag (e.g., an absolute position of the electronic tag and/or a relative position of the electronic tag relative to the terminal device) according to the identification of the electronic tag.

Specifically, the terminal device may determine the absolute position of the electronic tag according to the Tag ID.

Alternatively, the terminal device may determine the relative position of the electronic tag according to the Tag ID, and determine the absolute position of the electronic tag based on the relative position of the electronic tag and the absolute position of the terminal device. The terminal device may trigger a positioning process to obtain the absolute position of the terminal device. For example, the terminal device triggers Uu interface-based positioning or other positioning methods to obtain the absolute position of the terminal device.

The relative position or the absolute position of the electronic tag may be determined by the terminal device. For example, the terminal device transmits a signal to an electronic tag and receives a signal returned by the electronic tag, and the terminal device can determine the relative position of the electronic tag based on information such as a phase difference between the transmitted signal and the received signal. For another example, the terminal device along with one or more other terminal devices in the vicinity may send signals to the electronic tag respectively, calculate the relative positions of the electronic tag relative to the above terminal devices, and determine the absolute position of the electronic tag according to the calculated relative positions.

The absolute position of the electronic tag may also be referred to as an exact position of the electronic tag, an absolute position of the Tag ID, an exact position of the Tag ID, or the like. The relative position of the electronic tag may also be referred to as a relative position of the electronic tag relative to the terminal device, a relative position of the Tag ID, a relative position of the Tag ID relative to the terminal device, or the like.

At S530, the terminal device transmits a first positioning response of the electronic tag to the first network device. The first positioning response carries the position of the electronic tag. Specifically, the first positioning response may carry the absolute position of the electronic tag and/or the relative position of the electronic tag relative to the terminal device. In some embodiments, the Tag ID and/or the UE ID may also be carried in the first positioning response.

Specifically, if the terminal device determines the absolute position of the electronic tag in S520, the absolute position of the electronic tag is carried in the first positioning response.

Alternatively, if the terminal device determines the relative position of the electronic tag in S520, the relative position of the electronic tag is carried in the first positioning response.

At S540, the first network device acquires a position of the electronic tag according to the first positioning response of the electronic tag.

Specifically, if the absolute position of the electronic tag is carried in the first positioning response, the first network device may directly acquire the absolute position of the electronic tag from the first positioning response.

Alternatively, if the relative position of the electronic tag is carried in the first positioning response, the first network device may determine the absolute position of the electronic tag by using the relative position and the absolute position of the terminal device.

After determining or acquiring the position of the electronic tag, the first network device may transmit the position of the electronic tag to other network elements of the core network. After the core network obtains the position of the electronic tag, the core network may provide the position to a third party application (such as the AF), to open up the accurate position of the electronic tag to the third party.

In an embodiment of the present disclosure, the electronic tag may be an RFID tag, a passive IoT tag, an ambient IoT tag, or the like.

As can be seen from the embodiment shown in FIG. 5, there are at least two ways of positioning the electronic tag, in the first way, the terminal device determines the absolute position of the electronic tag, and in the second way, the first network device determines the absolute position of the electronic tag.

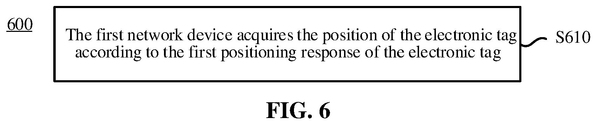

The embodiment of the present disclosure provides a positioning method, which can be used for positioning an electronic tag. FIG. 6 is a schematic flowchart of a positioning method 600 according to an embodiment of the present disclosure, and the method can be applied to any one of the systems shown in FIGs. 1 to 3, but is not limited thereto. The method includes at least part of operation S610.

At S610, a first network device acquires a position of the electronic tag according to a first positioning response of the electronic tag.

For example, the first network device may be the LMF.

The electronic tag may include at least one of an RFID tag, a passive IoT tag, and an ambient IoT tag.

In some embodiments, the first positioning response of the electronic tag may carry a relative position of the electronic tag relative to the terminal device and/or an absolute position of the electronic tag.

When the first positioning response carries a relative position of the electronic tag relative to the terminal device, the first network device may determine an absolute position of the electronic tag by using the relative position and the absolute position of the terminal device.

When the first positioning response carries an absolute position of the electronic tag, the first network device may extract the absolute position directly from the first positioning response.

In some embodiments, before receiving the first positioning response, the first network device may send a first positioning request of the electronic tag to the terminal device, and the first positioning request carries at least one of an identification of the electronic tag and an identification of the terminal device associated with the electronic tag. The first network device receives the first positioning response of the electronic tag from the terminal device, and the first positioning response may carry a position of the electronic tag, and may also carry at least one of an identification of the electronic tag and an identification of the terminal device associated with the electronic tag.

After the position of the electronic tag is acquired, the first network device may transmit the position of the electronic tag, to open up the position of the electronic tag to a third party.

In some embodiments, before the electronic tag is located, the privacy of the UE and/or the electronic tag may be verified, to determine whether the electronic tag and/or the terminal device associated with the electronic tag allows to open up the position information of the electronic tag to a third party. In the case that the verification is passed, the electronic tag is located. In this way, the security of electronic tags can be guaranteed. When the third party initiates a positioning request of the electronic tag, the position of the electronic tag can be acquired and opened up to the third party only when the electronic tag and/or the terminal device associated with the electronic tag allows to open up the position information of the electronic tag to the third party. Furthermore, whether the position of the electronic tag is open up to a third party may be set by the terminal device or the core network element. For example, the configuration "whether the electronic tag and/or the terminal device associated with the electronic tag allows to open up the position information of the electronic tag to a third party" can be adjusted or modified, and the configuration may be saved in unified data management (UDM), and may be adjusted or modified by the terminal device or the core network element in different situations.

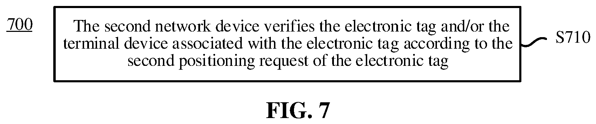

The embodiment of the present disclosure provides a positioning method, and FIG. 7 is a schematic flowchart of a positioning method 700 according to an embodiment of the present disclosure. The method can be applied to any one of the systems shown in FIGs. 1 to 3, but is not limited thereto. The method includes at least part of operation S710.

At S710, the second network device verifies the electronic tag and/or the terminal device associated with the electronic tag according to the second positioning request of the electronic tag.

For example, the second network device verifies whether the electronic tag and/or the terminal device associated with the electronic tag allows to open up the position information of the electronic tag to a third party.

In some embodiments, the second network device may include a GMLC, a LMF, an AMF, or other network element.

The second network device may receive a second positioning request of the electronic tag from the fifth network device, and the second positioning request may carry an identification (Tag ID) of the electronic tag.

For example, the fifth network device may include a network exposure function (NEF) or an application function (AF). If the second network device receives the second positioning request of the electronic tag from the AF, the second network device may further authorize the request of the AF, to determine whether to allow the AF to request position information. In the previous embodiment, verifying the privacy of the UE and/or the electronic tag is to configure the privacy of the UE and/or the electronic tag, and protect the privacy of one or more UEs and/or the electronic tags. In this embodiment, authorizing the request of the AF is to protect the privacy of the UE and/or the electronic tag involved in the network according to the configuration of the AF. For example, one or more AFs may be configured to be allowed to request a position of an electronic tag, or may be configured to be not allowed to request a position of an electronic tag, and the request of the AF may be authorized according to the configuration. When the second request from an AF is received, the configuration for the AF is searched for, and if the AF is allowed to request a position of the electronic tag according to the configuration, the AF is authorized, and then the privacy of the UE and/or the electronic tag is verified, or the position of the electronic tag is acquired directly. If the AF is not allowed to request the position of the electronic tag according to the configuration, the AF is not authorized to acquire the position of the electronic tag.

With taking a GMLC as an example of the second network device, the second network device may be verified in at least the following two ways.

In a first manner, the GMLC interacts with a third network device to verify the electronic tag.

The third network device may be a unified data management (UDM) function. Privacy information of multiple electronic tags may be stored in advance in the UDM.

For example, the GMLC verifies Tag 1. The GMLC interacts with the UMD, and determine that the verification for Tag 1 is passed if the GMLC queries information "Tag 1 allows to open up position information to the third party" in UDM.

In case that the electronic tag allows to open up the position information to the third party, the GMLC acquires information about the terminal device associated with the electronic tag from a fourth network device, and transmits a third positioning request of the electronic tag (to for example the AMF) based on the information about the terminal device associated with the electronic tag, to request the position information of the electronic tag. The third positioning request of the electronic tag may carry at least one of an identification of the electronic tag and an identification of the terminal device associated with the electronic tag. The fourth network device may be a network function (NF), and the NF may store an association relationship between the terminal device and the electronic tag.

In the case that the electronic tag does not allow to open up the position information to the third party, the GMLC may return a message about rejecting the positioning request to the fifth network device (such as the NEF or the AF).

In a second manner, the GMLC interacts with the third network device to verify the terminal device associated with the electronic tag.

After the GMLC receives the second positioning request carrying the Tag ID, the GMLC determines the terminal device associated with the Tag before verifying the terminal device associated with the Tag. For example, the second network device may acquire information of the terminal device associated with the electronic tag from the fourth network device.

After the terminal device associated with the Tag is determined, the GMLC may interact with the third network device (such as the UMD) to verify the terminal device associated with the electronic Tag. Privacy information of multiple UEs and electronic tags associated with the multiple UEs may be stored in advance in the UDM. For example, the GMLC verifies the UE 1 associated with Tag 1. The GMLC interacts with the UMD, and determine that the verification for UE 1 is passed if the GMLC queries information "UE1 allows to open up position information of the Tag 1 associated with UE1 to the third party" stored in UDM..

In case that the UE 1 allows to open up the position information of the associated Tag 1 a third party, the GMLC may send (e.g., to the AMF) a third positioning request of the electronic tag, for requesting the position information of the electronic tag. The third positioning request of the electronic tag may carry at least one of an identification of the electronic tag and an identification of the terminal device associated with the electronic tag.

In case where the UE 1 is not allowed to open up the position information of the associated Tag 1 to a third party, the GMLC may return a message about rejecting the positioning request to the fifth network device (such as the NEF or the AF).

Unified management of the privacy of the electronic tags can be implemented in the above first manner, and the privacy configurations of multiple electronic tags can be stored in advance in the network element such as the UDM. The UE can manage the privacy of the electronic tag associated with the UE in the above second manner, and the UE can interact with the network element such as a UMD in advance to allow to open up the positions of one or more electronic tags associated with the UE to a third party.

In the first and second manners, the fourth network device may be a NF, and the NF may store an association relationship between the terminal device and the electronic tag. The GMLC may send a query request to the NF, and the query request carries an identification of the electronic tag (Tag ID). The GMLC receives a query response from the NF that carries the identification (UE ID) of the terminal device associated with the electronic tag. Further, the query response may also carry an identification (Tag ID) of the electronic tag.

In an example, the second network device verifies the electronic tag and/or the terminal device associated with the electronic tag according to a second positioning request of the electronic tag. For example, the second network device may be a GMLC, an LMF, or other network element. The second network device may receive a second positioning request from the AF, the NEF or the like, and the second positioning request may include an identification of the electronic tag to be positioned. According to the identification of the electronic tag, the second network device may verify the electronic tag and/or the terminal device associated with the electronic tag, for example verifying whether the electronic tag and/or the terminal device associated with the electronic tag allows to open up the position information of the electronic tag to a third party. A verifying manner has been described in the above example, and will not be repeated here.

If the position information of the electronic tag is allowed to be opened up, the second network device may further transmit the positioning request of the electronic tag, for example, the third positioning request of the electronic tag. The third positioning request may carry the identification of the electronic tag and/or the identification of the terminal device.

When the positioning request is transmitted to the first network device, the first network device may transmit the positioning request to the terminal device, and the terminal device determines a relative position or an absolute position of the electronic tag. For example, the first network device may send a first positioning request of the electronic tag to the terminal device, and the first positioning request may carry the identification of the electronic tag and/or the identification of the terminal device. The first network device may be an LMF, an AMF, or other network element.

After the first positioning response (carrying the absolute position and/or relative position of the electronic tag) fed back by the terminal device is received, the first network device may directly acquire the absolute position of the electronic tag carried in the first positioning response. Alternatively, the first network device may acquire the relative position of the electronic tag carried in the first positioning response and determine the absolute position of the terminal device, and the first network device may determine the absolute position of the electronic tag by using the relative position and the absolute position of the terminal device.

In the above example, before the position of the electronic tag is determined, the electronic tag or the terminal device associated with the electronic tag is first verified, and when the verification is passed, the position of the electronic tag is allowed to be obtained, thereby protecting the privacy of the electronic tag and improving information security.

The first embodiment is described as follows.

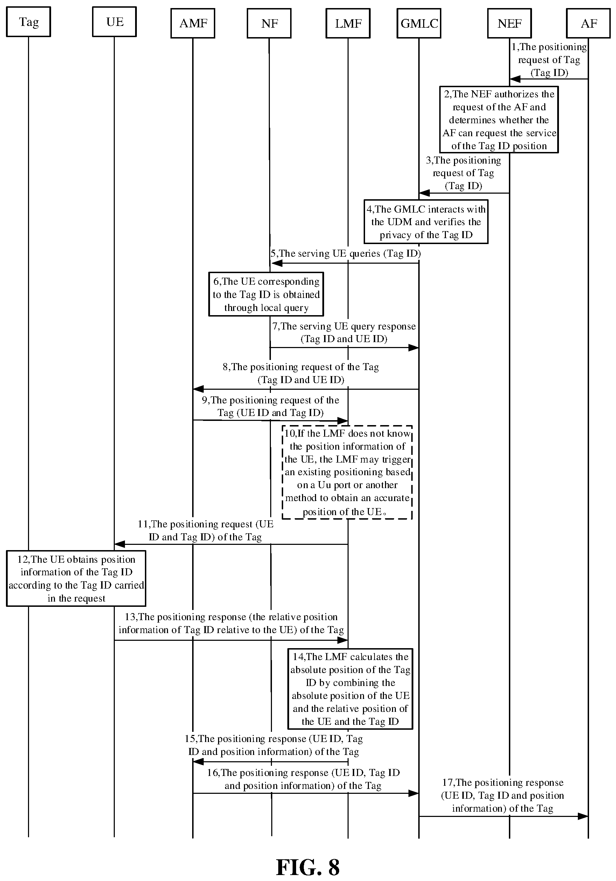

FIG. 8 is a schematic flowchart of the first embodiment of the present disclosure, in which the GMLC verifies privacy of a Tag ID, and the LMF calculates an exact position of the Tag ID. As shown in FIG. 8, the present embodiment includes the following operations 1 to 17.

At operation 1, the AF of a third party sends a positioning request to the GMLC through the NEF when the AF wants to obtain a position of a certain Tag, and the positioning request includes the Tag ID.

At operation 2, the NEF authorizes the request of the AF and determines whether the AF can request the service of the position of the Tag ID. If the authorization of the NEF passes, the flow proceeds to operation 3.

At operation 3, the NEF sends a positioning request of the Tag to the GMLC, and the positioning request includes an identification (Tag ID) of the Tag to be positioned. The flow proceeds to operation 4.

The above operations 1 to 3 are optional operations. Other methods may be adopted in the present embodiment to replace the above operations 1 to 3. For example, when the AF of a third party wants to obtain the position of a certain Tag, the AF can directly send a positioning request to the GMLC, and the positioning request includes the Tag ID. The GMLC authorizes the request of the AF and determines whether the AF can request the service of the position of the Tag ID. If authorization of the GMLC passes, the flow proceeds to operation 4.

At operation 4, the GMLC interacts with the UDM and verifies the privacy of the Tag ID, for example, verifying whether the Tag ID allows to open up the position information to the third party. If the verification is passed, that is, the Tag ID allows to open up the position information to the third party, the flow proceeds to operation 5.

At operation 5, the GMLC interacts with a network element NF that specifically stores a mapping relationship between the UE IDs and the Tag IDs, and queries the UE associated with the Tag ID, that is, the serving UE corresponding to the Tag ID. For example, the GMLC sends a serving UE query request to the NF, and the serving UE query request carries the Tag ID.

At operation 6, the NF obtains the UE corresponding to the Tag ID through local query.

At operation 7, the NF returns the UE ID and/or the Tag ID to the GMLC. For example, the NF returns a serving UE query response carrying the Tag ID and the UE ID to the GMLC.

At operation 8, the GMLC selects a serving AMF of the UE according to the UE ID carried in the serving UE query response, and transmits the positioning request of the Tag to the serving AMF, and the positioning request of the Tag may carry the Tag ID and/or the UE ID.

At operation 9, the AMF sends the positioning request of the Tag to the LMF, and the positioning request of the tag may carry the Tag ID and/or the UE ID.

At operation 10, the LMF determines whether position information of the UE is present according to the UE ID carried in the positioning request of the Tag, and if the LMF does not have the position information of the UE, the LMF may trigger an existing positioning method (such as a positioning method based on a Uu interface or another manner) to obtain an accurate position of the UE.

At operation 11, the LMF transmits a positioning request of the Tag to the UE according to the UE ID in the positioning request, and the positioning request of the Tag may include the Tag ID and/or the UE ID.

At operation 12, the UE obtains position information of the Tag according to the Tag ID carried in the positioning request of the Tag. In the present embodiment, the UE may obtain a relative position of the Tag (i.e., a relative position of the Tag relative to the UE).

At operation 13, the UE transmits a positioning response of the Tag to the LMF, and the positioning response of the Tag may contain the relative position of the Tag.

At operation 14, the LMF calculates an absolute position (i.e., an accurate position) of the Tag ID by combining the absolute position of the UE and the relative position of the UE and the Tag (i.e., the relative position of the Tag relative to the UE).

At operation 15, the LMF transmits a positioning response of the Tag to the AMF, and the positioning response of the Tag may carry the Tag ID and the absolute position of the Tag, and may also include the UE ID.

At operation 16, the AMF transmits the positioning response of the Tag to the GMLC, and the positioning response of the Tag may carry the Tag ID and the absolute position of the Tag, and may also carry the UE ID.

At operation 17, the GMLC transmits the positioning response of the Tag to the AF through the NEF, and the positioning response of the Tag may carry the Tag ID and the absolute position of the Tag, and may also carry the UE ID. Alternatively, the GMLC may send the positioning response of the Tag directly to the AF.

A second embodiment is described as follows.

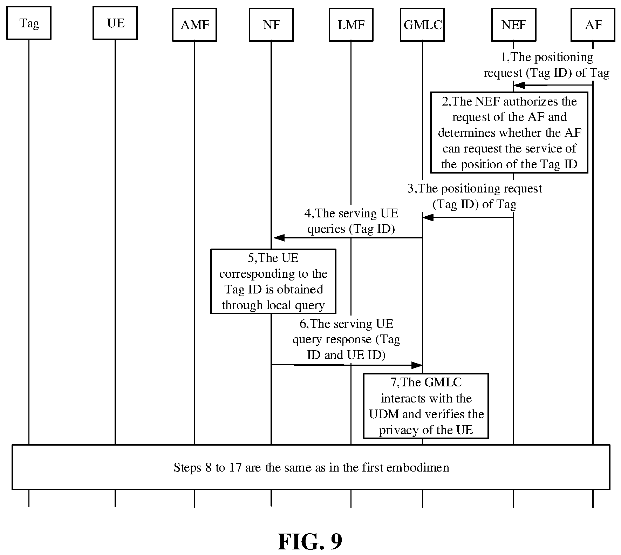

FIG. 9 is a schematic flowchart of the second embodiment of the present disclosure, in which the GMLC verifies privacy of a Tag ID, and the LMF calculates an exact position of a Tag. As shown in FIG. 9, the present embodiment includes the following operations 1 to 17.

At operation 1, an AF of a third party sends a positioning request to the GMLC through the NEF when the AF wants to obtain the position of a certain Tag, and the positioning request includes the Tag ID.

At operation 2, the NEF authorizes the request of the AF and determines whether the AF can request the service of a position of the Tag ID. If authorization of the NEF passes, the flow proceeds to operation 3.

At operation 3, the NEF sends a positioning request of the Tag to the GMLC, and the positioning request includes an identification (Tag ID) of the Tag to be positioned. The flow proceeds to operation 4.

The above operations 1 to 3 are optional operations. Other methods may be adopted in the present embodiment to replace the above operations 1 to 3. For example, when the AF of a third party wants to obtain the position of a certain Tag, the AF can directly send a positioning request to the GMLC, and the positioning request includes the Tag ID. The GMLC authorizes the request of the AF and determines whether the AF can request the service of the position of the Tag ID. If authorization of the GMLC passes, the flow proceeds to operation 4.

At operation 4, the GMLC interacts with a network element NF that specifically stores a mapping relationship between the UE IDs and the Tag IDs, and queries the UE associated with the Tag ID, that is, the serving UE corresponding to the Tag ID. For example, the GMLC sends a serving UE query request to the NF, and the serving UE query request carries the Tag ID.

At operation 5, the NF obtains the UE corresponding to the Tag ID through local query.

At operation 6, the NF returns the UE ID and/or the Tag ID to the GMLC. For example, the NF returns a serving UE query response carrying the Tag ID and the UE ID to the GMLC.

At operation 7, the GMLC verifies the privacy of the UE, that is, verifying whether the UE allows to open up the position of the Tag to a third party. For example, the GMLC interacts with the UDM to verify the privacy of the UE. If the verification is passed, that is, the UE allows to open up the position information of the Tag ID to the third party, the flow proceeds to operation 8.

At operation 8, the GMLC selects a serving AMF of the UE, and sends the positioning request of the Tag to the serving AMF, and the positioning request of the Tag may carry the Tag ID and/or the UE ID.

At operation 9, the AMF sends the positioning request of the Tag to the LMF, and the positioning request of the tag may carry the Tag ID and/or the UE ID.

In the subsequent process, the exact position of the Tag ID is calculated by the LMF. which may refer to operations 10 to 17 of the first embodiment, and will not be described here.

Different from the first embodiment, when the GMLC receives the positioning request of the Tag, the UE corresponding to the Tag ID is queried from the NF in this embodiment, and after the serving UE ID is received, the GLMC verifies the privacy of the UE, to determine whether the UE allows to open up the position information corresponding to the Tag ID to a third party. If the verification is passed, the flow performs locating the Tag.

A third embodiment is described as follows.

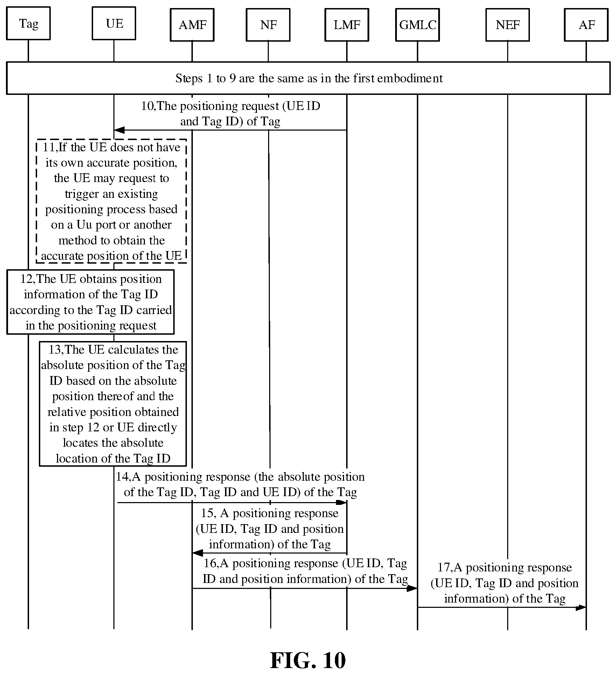

FIG. 10 is a schematic flowchart of the third embodiment of the present disclosure, in which the GMLC verifies privacy of an Tag ID (the manner of verifying the privacy is the same as that in the first embodiment), and the UE calculates an exact position of the Tag ID. As shown in FIG. 10, the present embodiment includes the following operations 1 to 17.

In operations 1 to 9, the GMLC verifies the privacy of the Tag ID, and the GMLC queries the UE corresponding to the Tag ID when the verification is passed, determines a serving AMF of the UE, and transmits a positioning request of the Tag to the LMF through the serving AMF, and the positioning request of the Tag may carry the Tag ID and/or the UE ID. Regarding the operations 1 to 9 in the third embodiment, reference can be made to operations 1 to 9 of the first embodiment, and will not be repeatedly described here.

At operation 10, the LMF transmits the positioning request of the Tag to the UE according to the UE ID in the positioning request of the Tag, and the positioning request of the Tag may carry the Tag ID and/or the UE ID.

At operation 11, if the UE does not know an accurate position thereof, the UE may request to trigger a positioning process (such as a positioning process based on a Uu interface or another method) to obtain the accurate position of the UE.

At operation 12, the UE obtains position information of the Tag according to the Tag ID carried in the positioning request of the Tag. In the present embodiment, the UE may obtain a relative position of the Tag (i.e., a relative position of the Tag relative to the UE) or an absolute position of the Tag.

At operation 13, if the relative position of the Tag is acquired in operation 12, the UE calculates the absolute position of the Tag based on the absolute position of the UE and the relative position of the Tag acquired in operation 12, and the flow proceeds to operation 14. Alternatively, if the absolute position of the Tag is acquired in operation 12, operation 14 is performed directly.

At operation 14, the UE transmits a positioning response of the Tag to the LMF, and the positioning response of the Tag may carry the Tag ID and the absolute position of the Tag, and may also carry the UE ID.

In operations 15 to 17, the LMF transmits the positioning response of the Tag to the AMF, the AMF transmits the positioning response of the Tag to the GMLC, and the GMLC transmits the positioning response of the Tag to the AF. Regarding the specific methods, reference may be made to operations 15 to 17 in the first embodiment, and the details will not be described here.

In the present embodiment, the UE is responsible for acquiring and calculating the absolute position of the Tag. The UE can directly locate the absolute position of the Tag, or the UE may calculate the absolute position of the Tag by collecting the relative position of the Tag relative to the UE and the absolute position of the UE. The positioning response of the Tag transmitted by the UE to the LMF carries the absolute position of the Tag.

A fourth embodiment is described as follows.

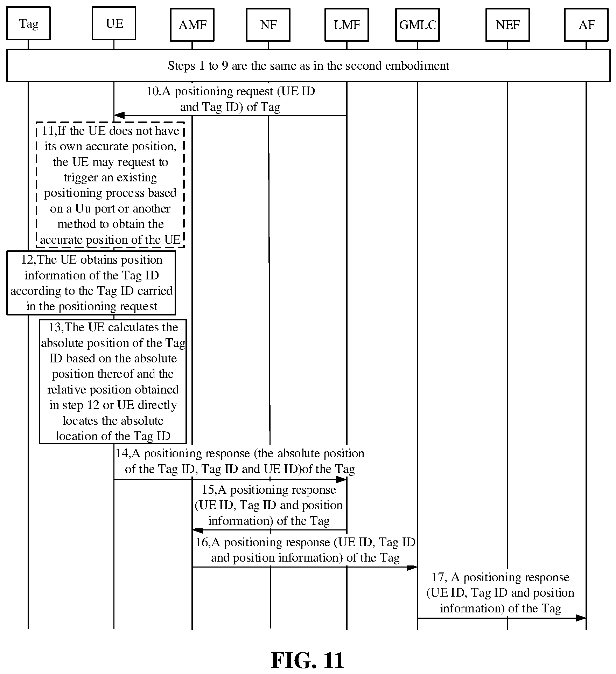

FIG. 11 is a schematic flowchart of the fourth embodiment of the present disclosure, in which the GMLC verifies the privacy of the Tag ID (the manner of verifying the privacy is the same as that in the second embodiment), and the UE calculates the exact position of the Tag. As shown in FIG. 11, the embodiments include operations 1 to 17.

In operations 1 to 9, the GMLC verifies the privacy of the UE, and when the verification is passed, the GMLC determines a serving AMF of the UE, and transmits a positioning request of the Tag to the LMF through the serving AMF, and the positioning request of the Tag may carry the Tag ID and/or the UE ID. Regarding the operations 1 to 9 of the fourth embodiment, reference can be made to operations 1 to 9 of the second embodiment, and will not be repeatedly described herein.

The following operations are used for positioning the Tag, and regarding the specific positioning manner, reference can be made to operations 10 to 17 in the third embodiment.

Similar to the third embodiment, the UE is responsible for acquiring and calculating the absolute position of the Tag in the present embodiment. The UE can directly locate the absolute position of the Tag or the UE may calculate the absolute position of the Tag by collecting the relative position of the Tag relative to the UE and the absolute position of the UE. The positioning response of the Tag transmitted by the UE to the LMF carries the absolute position of the Tag.

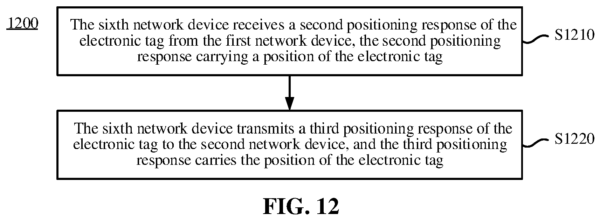

The present disclosure also provides a positioning method. FIG. 12 is a schematic flowchart of a positioning method 1200 according to an embodiment of the present disclosure, and the method can be applied to any one of the systems shown in FIGs. 1 to 3, but is not limited thereto. The method includes at least part of the following operations S1210 and S1220.

At S1210, the sixth network device receives a second positioning response of the electronic tag from the first network device, and the second positioning response carries a position of the electronic tag.

At S1220, the sixth network device transmits a third positioning response of the electronic tag to the second network device, and the third positioning response carries the position of the electronic tag.

For example, the sixth network device may be the AMF, the second network device may be the GMLC, and the first network device may be the LMF.

In some embodiments, the second positioning response may further carry at least one of an identification of the electronic tag and an identification of the terminal device associated with the electronic tag.

In some embodiments, the third positioning response may further carry at least one of an identification of the electronic tag and an identification of the terminal device associated with the electronic tag.

In some embodiments, the method further includes the following operations. The sixth network device receives, from the second network device, a third positioning request of the electronic tag, and the third positioning request carries at least one of an identification of the electronic tag and an identification of the terminal device associated with the electronic tag;

The sixth network device transmits a fourth positioning request of the electronic tag to the first network device, and the fourth positioning request carries at least one of an identification of the electronic tag and an identification of the terminal device associated with the electronic tag.

For other details of the positioning method of the sixth network device (such as the AMF), reference may be made to the related introduction of the AMF in the foregoing embodiment, and will not be repeatedly described here.

In the positioning method according to the embodiment of the present disclosure, a core network element (such as a GMLC) selects a corresponding UE according to the Tag ID, authorizes the positioning request of the AF (or another network element, such as a NEF, authorizes the positioning request of the AF), and verifies the privacy of the UE and the Tag. The core network element (LMF) sends a positioning request of the Tag ID to the UE to trigger the UE to locate the Tag. The UE obtains the Tag information and performs local calculation or reports the relative position to the LMF for calculation, to obtain the accurate position of the Tag ID. The core network opens up the exact position of the Tag ID to the third party.

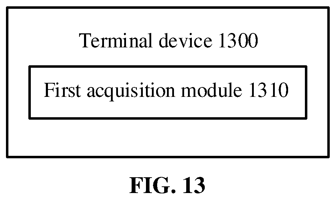

The embodiment of the present disclosure also provides a terminal device, and FIG. 13 is a schematic structural diagram of the terminal device 1300 according to the embodiment of the present disclosure, including a first acquisition module 1310.

The first acquisition module 1310 is configured to acquire a position of an electronic tag according to a first positioning request of the electronic tag.

In some embodiments, the first positioning request of the electronic tag carries an identification of the electronic tag.

In some embodiments, the first acquisition module 1310 is configured to determine the position of the electronic tag according to the identification of the electronic tag.

In some embodiments, the first acquisition module 1310 is configured to determine an absolute position of the electronic tag and/or a relative position of the electronic tag relative to the terminal device according to the identification of the electronic tag.

In some implementations, the first acquisition module 1310 is configured to: determine a relative position of the electronic tag relative to the terminal device according to the identification of the electronic tag; and determine an absolute position of the electronic tag by using the relative position and the absolute position of the terminal device.

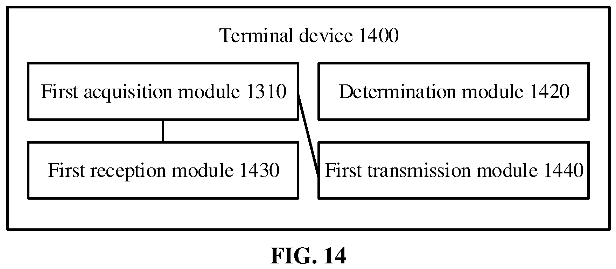

FIG. 14 is a schematic structural diagram of a terminal device 1400 according to an embodiment of the present disclosure. The terminal device 1400 includes one or more features of the embodiments of the terminal device 1300 described above. In a possible implementation, in an embodiment of the present disclosure, the terminal device further includes a determination module 1420.

The determination module 1420 is configured to trigger positioning and determine the absolute position of the terminal device.

In some embodiments, the positioning includes a Uu interface-based positioning.

In some embodiments, the first positioning request of the electronic tag further carries an identification of the terminal device.

In some embodiments, the terminal device further includes a first reception module 1430.

The first reception module 1430 is configured to receive the first positioning request of the electronic tag from the first network device.

In some embodiments, the terminal device further includes a first transmission module 1440.

The first transmission module 1440 is configured to transmit a first positioning response of the electronic tag to the first network device, and the first positioning response carries a position of the electronic tag.

In some implementations, the first network device includes a location management function (LMF).

In some embodiments, the electronic tag includes at least one of a radio frequency identification (RFID) tag, a passive IoT tag, and an ambient IoT tag.

It should be understood that the above-described and other operations and/or functions of the modules in the terminal device according to the embodiment of the present disclosure are used to implement corresponding flows in the terminal device in the method 400 in FIG. 4, which are not described herein for the sake of simplicity.

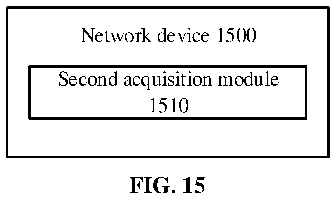

The embodiment of the present disclosure further provides a network device, and FIG. 15 is a schematic structural diagram of a network device 1500 according to an embodiment of the present disclosure, including a second acquisition module 1510.

The second acquisition module 1510 is configured to acquire a position of the electronic tag according to the first positioning response of the electronic tag.

In some embodiments, the first positioning response of the electronic tag carries a relative position of the electronic tag relative to the terminal device and/or an absolute position of the electronic tag.

In some embodiments, the second acquisition module 1510 is configured to determine the absolute position of the electronic tag by using the relative position and the absolute position of the terminal device.

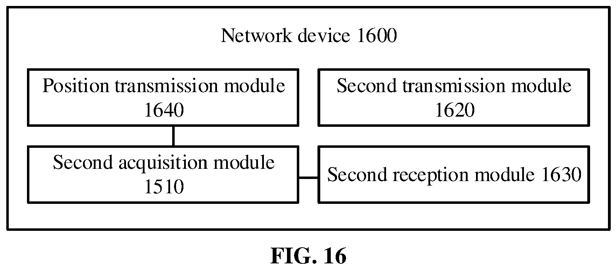

FIG. 16 is a schematic structural diagram of a network device 1600 according to an embodiment of the present disclosure. The network device 1600 includes one or more features of the embodiments of the above network device 1500. In a possible implementation, the network device may further include a second transmission module 1620 and a second reception module 1630 in an embodiment of the present disclosure.

The second transmission module 1620 is configured to transmit a first positioning request of the electronic tag to the terminal device, the first positioning request carries at least one of an identification of the electronic tag and an identification of the terminal device associated with the electronic tag.

The second reception module 1630 is configured to receive a first positioning response of the electronic tag from the terminal device.

In some embodiments, the first positioning response of the electronic tag carries at least one of an identification of the electronic tag and an identification of the terminal device associated with the electronic tag.

In some embodiments, the network device further includes a position transmission module 1640.

The position transmission module 1640 is configured to transmit the position of the electronic tag.

In some embodiments, the network device includes an LMF.

In some embodiments, the electronic tag includes at least one of an RFID tag, a passive IoT tag, and an ambient IoT tag.

It should be understood that the above-described and other operations and/or functions of the modules in the network device according to the embodiment of the present disclosure are used to implement corresponding flows of the first network device in the method 600 of FIG. 6, and not described herein for the sake of simplicity.

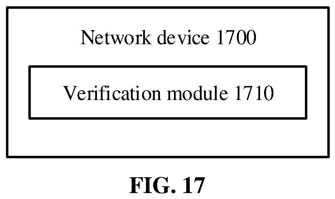

The embodiment of the present disclosure further provides a network device, and FIG. 17 is a schematic structural diagram of a network device 1700 according to an embodiment of the present disclosure, including a verification module 1710.

The verification module 1710 is configured to verify the electronic tag and/or the terminal device associated with the electronic tag according to a second positioning request of the electronic tag.

In some embodiments, the verification module 1710 verifies whether the electronic tag and/or the terminal device associated with the electronic tag allows to open up the position information of the electronic tag to a third party.

In some embodiments, the verification module 1710 interacts with the third network device to verify the electronic tag.

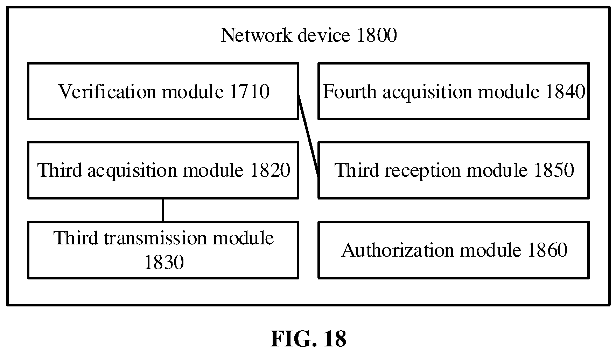

FIG. 18 is a schematic structural diagram of a network device 1800 according to an embodiment of the present disclosure. The network device 1800 includes one or more features of the embodiments of the network device 1700 described above. In a possible implementation, the network device in an embodiment of the present disclosure further includes a third acquisition module 1820 and a third transmission module 1830.

The third acquisition module 1820 is configured to acquire information of the terminal device associated with the electronic tag from the fourth network device, in a case that the electronic tag allows to open up the position information to a third party;

The third transmission module 1830 is configured to transmit a third positioning request of the electronic tag according to the information of the terminal device associated with the electronic tag.

In some embodiments, the verification module 1710 interacts with the third network device to verify the terminal device associated with the electronic tag.

In some embodiments, the network device further includes a fourth acquisition module 1840.

The fourth acquisition module 1840 is configured to acquire information of the terminal device associated with the electronic tag from the fourth network device.

In some embodiments, the fourth acquisition module 1840 for acquiring information of the terminal device associated with the electronic tag from the fourth network device is configured to: transmit a query request to the fourth network device, the query request carrying an identification of the electronic tag; and receive a query response from the fourth network device, the query response carrying an identification of the terminal device associated with the electronic tag.

In some embodiments, the query response further carries the identification of the electronic tag.

In some embodiments, the network device further includes a third reception module 1850.

The third reception module 1850 is configured to receive a second positioning request of the electronic tag from the fifth network device.

In some embodiments, the fifth network device includes a NEF.

In some embodiments, the fifth network device includes an AF.

In some embodiments, the network device further includes an authorization module 1860 which is configured to determine whether the AF is allowed to request position information.

In some embodiments, the second positioning request of the electronic tag carries the identification of the electronic tag.

In some embodiments, the third positioning request of the electronic tag carries at least one of the identification of the electronic tag and the identification of the terminal device associated with the electronic tag.

In some embodiments, the network device includes a GMLC.

In some embodiments, the third network device comprises a UDM.

In some embodiments, the fourth network device includes a NF, and the NF stores an association relationship between the terminal device and the electronic tag.

In some embodiments, the electronic tag includes at least one of a RFID tag, a passive IoT tag, and an ambient IoT tag.

It should be understood that the above and other operations and/or functions of the modules in the network device according to the embodiment of the present disclosure are used to implement the corresponding flows of the second network device in the method 700 in FIG. 7, and is not described herein for the sake of simplicity.

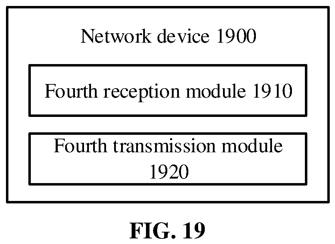

The embodiment of the present disclosure further provides a network device, and FIG. 19 is a schematic structural diagram of a network device 1900 according to an embodiment of the present disclosure, including a fourth reception module 1910 and a fourth transmission module 1920.

The fourth reception module 1910 is configured to receive a second positioning response of the electronic tag from the first network device, and the second positioning response carries a position of the electronic tag.

The fourth transmission module 1920 is configured to transmit a third positioning response of the electronic tag to the second network device, and the third positioning response carries a position of the electronic tag.

In some embodiments, the second positioning response further carries at least one of an identification of the electronic tag and an identification of the terminal device associated with the electronic tag.

In some embodiments, the third positioning response further carries at least one of an identification of the electronic tag and an identification of the terminal device associated with the electronic tag.

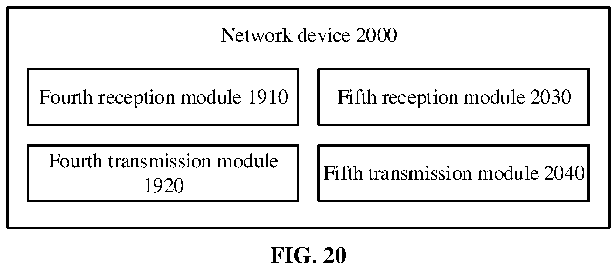

FIG. 20 is a schematic structural diagram of a network device 2000 according to an embodiment of the present disclosure. The network device 2000 includes one or more features of the embodiments of the network device 1900 described above. In a possible implementation, the network device in an embodiment of the present disclosure further includes a fifth reception module 2030 and a fifth transmission module 2040.

The fifth reception module 2030 is configured to receive a third positioning request of the electronic tag from the second network device, and the third positioning request carries at least one of an identification of the electronic tag and an identification of a terminal device associated with the electronic tag;

The fifth transmission module 2040 is configured to transmit a fourth positioning request of the electronic tag to the first network device, and the fourth positioning request carries at least one of an identification of the electronic tag and an identification of a terminal device associated with the electronic tag.

In some embodiments, the second network device comprises the GMLC.

In some embodiments, the first network device comprises the LMF.

In some embodiments, the network device comprises an AMF.

In some embodiments, the electronic tag includes at least one of a RFID tag, a passive IoT tag, and an ambient IoT tag.

It should be understood that the above and other operations and/or functions of the modules in the network device according to the embodiment of the present disclosure are used to implement the corresponding flows of the sixth network device in the method 1200 in FIG. 12, and not described herein for the sake of simplicity.

It should be noted that the described functions of modules (sub-modules, units, components, etc.) in the communication device of the embodiment of the present disclosure may be implemented by different modules (sub-modules, units, components, etc.) or by the same module (sub-module, unit, component, etc.). For example, the first reception module and the second reception module may be different modules or the same module, and both of them can realize corresponding functions in the embodiment of the present disclosure. In addition, the transmission module and the reception module in the embodiment of the present disclosure may be implemented by the transceiver of the device, and some or all of the remaining modules may be implemented by the processor of the device.

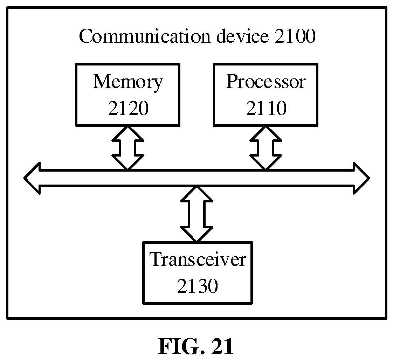

FIG. 21 is a schematic structural diagram of a communication device 2100 according to an embodiment of the present disclosure. The communication device 2100 shown in FIG. 21 includes a processor 2110, and the processor 2110 can invoke and execute a computer program from a memory to implement the method in the embodiment of the present disclosure.

In some embodiments, as shown in FIG. 21, the communication device 2100 may further include a memory 2120. The processor 2110 may invoke and execute a computer program from the memory 2120 to implement the communication device in the embodiment of the present disclosure.

The memory 2120 may be a separate device independent of the processor 2110 or may be integrated in the processor 2110.

In some embodiments, as shown in FIG. 21, the communication device 2100 may further include a transceiver 2130, and the processor 2110 may control the transceiver 2130 to communicate with other devices. The processor may control the transceiver to transmit information or data to other devices or receive information or data transmitted by other devices.

The transceiver 2130 may include a transmitter and a receiver. The transceiver 2130 may further include antennas, and the number of antennas may be one or more.

In some embodiments, the communication device 2100 may be the communication device of the embodiment of the present disclosure, and the communication device 2100 may implement corresponding flows implemented by the communication device in each method of the embodiment of the present disclosure, and will not be described herein for the sake of simplicity.

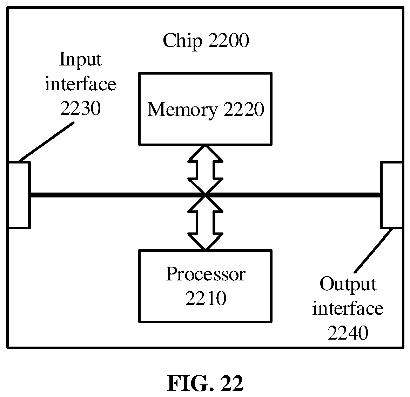

FIG. 22 is a schematic structural diagram of a chip 2200 according to an embodiment of the present disclosure. The chip 2200 shown in FIG. 22 includes a processor 2210, which can invoke and execute a computer program from a memory to implement the method in the embodiment of the present disclosure.

In some embodiments, as shown in FIG. 22, the chip 2200 may further include a memory 2220. The processor 2210 may invoke and execute a computer program from the memory 2220 to implement the method in the embodiment of the present disclosure.

The memory 2220 may be a separate device independent of the processor 2210 or may be integrated in the processor 2210.

In some embodiments, the chip 2200 may further include an input interface 2230. The processor 2210 may control the input interface 2230 to communicate with other devices or chips, specifically, the processor may control the input interface to acquire information or data transmitted by other devices or chips.

In some embodiments, the chip 2200 may further include an output interface 2240. The processor 2210 may control the output interface 2240 to communicate with other devices or chips, specifically, the processor 2210 may control the output interface to output information or data to other devices or chips.

In some embodiments, the chip can be applied to the communication device in the embodiment of the present disclosure, and the chip can implement the corresponding process implemented by the network device in each method of the embodiment of the present disclosure, and will not be described herein for the sake of simplicity.

It should be understood that the chip mentioned in the embodiments of the present disclosure may also be referred to as a system-level chip, a system-on-chip, a system chip, or a chip system on chip.

The processor mentioned above may be a general-purpose processor, a digital signal processor (DSP), a field programmable gate array (FPGA), an application specific integrated circuit (ASIC), or other programmable logic device, a transistor logic device, a discrete hardware component, or the like. The general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is an exemplary but not restrictive, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), and the like. In other words, the memory in the embodiments of the present disclosure is intended to include, but is not limited to, these and any other suitable type of memory.

The embodiments described above may be implemented in whole or in part by software, hardware, firmware, or any combination thereof. When implemented using software, the embodiments may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer readable storage medium or transferred from one computer readable storage medium to another computer readable storage medium, the computer instructions may be transmitted from one website site, computer, server, or data center to another website site, computer, server, or data center in wired (e.g., a coaxial cable, an optical fiber, a digital subscriber line (DSL)) or wireless (e.g., infrared, wireless, microwave, etc.) manner. The computer-readable storage medium may be any available medium accessible by a computer or a data storage device such as a server, a data center, or the like that integrates one or more available mediums. The available medium may be a magnetic medium (e.g., a floppy disk, a hard disk, a magnetic tape), an optical medium (e.g., a DVD), or a semiconductor medium (e.g., a solid state disk (SSD)), or the like.

It should be understood that in various embodiments of the present disclosure, the sequence numbers of the above-described processes do not mean the execution sequence, and the execution sequence of each process should be determined by its function and internal logic, and should not constitute any limitation on the implementation of the embodiments of the present disclosure.

Those skilled in the art can clearly understand that, for convenience and conciseness of the description, regarding the specific operation processes of the systems, devices, and units described above, reference may be made to the corresponding processes in the above-described method embodiments, and will not be repeatedly described herein.

The foregoing are merely specific embodiments of the present disclosure, but the scope of protection of the present disclosure is not limited thereto, and changes or substitutions easily conceived by any person skilled in the art within the technical scope disclosed in the present disclosure should fall within the scope of protection of the present disclosure. Therefore, the scope of protection of the present disclosure should be subject to the scope of protection of the claims.

## Claims

1. A positioning method, comprising:
acquiring, by a terminal device, a position of an electronic tag according to a first positioning request of the electronic tag.

2. The method of claim 1, wherein the first positioning request of the electronic tag carries an identification of the electronic tag.

3. The method of claim 2, wherein the acquiring, by a terminal device, a position of an electronic tag according to a first positioning request of the electronic tag comprises:
determining, by the terminal device, a position of the electronic tag according to the identification of the electronic tag.

4. The method of claim 3, wherein the determining, by the terminal device, a position of the electronic tag according to the identification of the electronic tag comprises:
determining, by the terminal device, an absolute position of the electronic tag and/or a relative position of the electronic tag relative to the terminal device according to the identification of the electronic tag.

5. The method of claim 4, wherein the determining, by the terminal device, an absolute position of the electronic tag according to the identification of the electronic tag comprises:
determining, by the terminal device, a relative position of the electronic tag relative to the terminal device according to the identification of the electronic tag; and
determining, by the terminal device, the absolute position of the electronic tag by using the relative position and an absolute position of the terminal device.

6. The method of any one of claims 1 to 5, further comprising: triggering, by the terminal device, positioning to determine the absolute position of the terminal device.

7. The method of claim 6, wherein the positioning comprises Uu interface-based positioning.

8. The method of any one of claims 2 to 7, wherein the first positioning request of the electronic tag further carries an identification of the terminal device.

9. The method of any one of claims 1 to 8, further comprising: receiving, by the terminal device, the first positioning request of the electronic tag from a first network device.

10. The method of claim 9, further comprising: transmitting, by the terminal device, a first positioning response of the electronic tag to the first network device, the first positioning response carrying the position of the electronic tag.

11. The method of any of claims 1 to 10, wherein the first network device comprises a location management function (LMF).

12. The method of any one of claims 1 to 11, wherein the electronic tag comprises at least one of a radio frequency identification (RFID) tag, a passive internet of things (IoT) device tag and an ambient IoT tag.

13. A positioning method, comprising:
acquiring, by the first network device, a position of an electronic tag according to a first positioning response of the electronic tag.

14. The method of claim 13, wherein the first positioning response of the electronic tag carries a relative position of the electronic tag relative to a terminal device and/or an absolute position of the electronic tag.

15. The method of claim 14, wherein the acquiring, by the first network device, the position of the electronic tag according to the first positioning response of the electronic tag comprises:
determining, by the first network device, an absolute position of the electronic tag by using the relative position and an absolute position of the terminal device.

16. The method of any one of claims 13 to 15, further comprising:
transmitting, by the first network device, a first positioning request of the electronic tag to a terminal device, the first positioning request carrying at least one of an identification of the electronic tag and an identification of a terminal device associated with the electronic tag; and
receiving, by the first network device, the first positioning response of the electronic tag from the terminal device.

17. The method of claim 16, wherein the first positioning response of the electronic tag carries at least one of the identification of the electronic tag and the identification of the terminal device associated with the electronic tag.

18. The method of any one of claims 13 to 17, further comprising: transmitting, by the first network device, a position of the electronic tag.

19. The method of any one of claims 13 to 18, wherein the first network device comprises a location management function (LMF).

20. The method of any one of claims 13 to 19, wherein the electronic tag comprises at least one of a radio frequency identification (RFID) tag, a passive internet of things (IoT) device tag and an ambient IoT tag.

21. A positioning method, comprising:
verifying, by a second network device, an electronic tag and/or a terminal device associated with the electronic tag according to a second positioning request of the electronic tag.

22. The method of claim 21, wherein the second network device verifies whether the electronic tag and/or the terminal device associated with the electronic tag allows to open up the position information of the electronic tag to a third party.

23. The method of claim 21 or 22, wherein the second network device interacts with a third network device to verify the electronic tag.

24. The method of claim 23, further comprising:
acquiring, by the second network device, information of the terminal device associated with the electronic tag from a fourth network device, in case that the electronic tag allows to open up the position information to a third party; and
transmitting, by the second network device, a third positioning request of the electronic tag according to the information of the terminal device associated with the electronic tag.

25. The method of claim 21 or 22, wherein the second network device interacts with a third network device to verify the terminal device associated with the electronic tag.

26. The method of claim 25, further comprising:
acquiring, by the second network device, information of the terminal device associated with the electronic tag from a fourth network device.

27. The method of claim 24 or 26, wherein the acquiring, by the second network device, information of a terminal device associated with the electronic tag from a fourth network device comprises:
sending, by the second network device, a query request to the fourth network device, the query request carrying an identification of the electronic tag; and
receiving, by the second network device, a query response from the fourth network device, the query response carrying an identification of the terminal device associated with the electronic tag.

28. The method of claim 27, wherein the query response further carries the identification of the electronic tag.

29. The method of any one of claims 21 to 28, further comprising: receiving, by the second network device, a second positioning request of the electronic tag from a fifth network device.

30. The method of claim 29, wherein the fifth network device comprises a network exposure function (NEF).

31. The method of claim 29, wherein the fifth network device comprises an application function (AF).

32. The method of claim 31, further comprising: determining, by the second network device, whether the AF is allowed to request position information.

33. The method of any one of claims 21 to 32, wherein the second positioning request of the electronic tag carries an identification of the electronic tag.

34. The method of claim 24, wherein the third positioning request of the electronic tag carries at least one of an identification of the electronic tag and an identification of the terminal device associated with the electronic tag.

35. The method of any one of claims 21 to 34, wherein the second network device comprises a gateway mobile location center (GMLC).

36. The method of any one of claims 23 to 28, wherein the third network device comprises unified data management (UDM).

37. The method of claim 24, 26, or 27, wherein the fourth network device comprises a network function (NF), the NF storing an association relationship of the terminal device and the electronic tag.

38. The method of any one of claims 21 to 37, wherein the electronic tag comprises at least one of a radio frequency identification (RFID) tag, a passive internet of things (IoT) device tag and an ambient IoT tag.

39. A positioning method comprising:
receiving, by a sixth network device, a second positioning response of an electronic tag from a first network device, the second positioning response carrying a position of the electronic tag; and
transmitting, by the sixth network device, a third positioning response of the electronic tag to a second network device, the third positioning response carrying the position of the electronic tag.

40. The method of claim 39, wherein the second positioning response further carries at least one of an identification of the electronic tag and an identification of a terminal device associated with the electronic tag.

41. The method of claim 39, wherein the third positioning response further carries at least one of an identification of the electronic tag and an identification of a terminal device associated with the electronic tag.

42. The method of any one of claims 39 to 41, further comprising:
receiving, by the sixth network device, a third positioning request of the electronic tag from the second network device, the third positioning request carrying at least one of an identification of the electronic tag and an identification of a terminal device associated with the electronic tag; and
transmitting, by the sixth network device, a fourth positioning request of the electronic tag to the first network device, the fourth positioning request carrying at least one of the identification of the electronic tag and the identification of the terminal device associated with the electronic tag.

43. The method of any one of claims 39 to 42, wherein the second network device comprises a gateway mobile position center (GMLC).

44. The method of any one of claims 39 to 43, wherein the first network device comprises a location management function (LMF).

45. The method of any one of claims 39 to 44, wherein the sixth network device comprises an access and mobility management function (AMF).

46. The method of any one of claims 39 to 45, wherein the electronic tag comprises at least one of a radio frequency identification (RFID) tag, a passive internet of things (IoT) device tag and an ambient IoT tag.

47. A terminal device comprising:
a first acquisition module configured to acquire a position of an electronic tag according to a first positioning request of the electronic tag.

48. The terminal device of claim 47, wherein the first positioning request of the electronic tag carries an identification of the electronic tag.

49. The terminal device according to claim 48, wherein the first acquisition module is configured to determine a position of the electronic tag according to the identification of the electronic tag.

50. The terminal device according to claim 49, wherein the first acquisition module is configured to determine an absolute position of the electronic tag and/or a relative position of the electronic tag relative to the terminal device according to the identification of the electronic tag.

51. The terminal device of claim 50, wherein the first acquisition module is configured to:
determining the relative position of the electronic tag relative to the terminal device according to the identification of the electronic tag; and
determining the absolute position of the electronic tag by using the relative position and an absolute position of the terminal device.

52. The terminal device of any one of claims 47 to 51, further comprising:
a determination module configured to trigger positioning to determine the absolute position of the terminal device.

53. The terminal device of claim 52, wherein the positioning comprises Uu interface-based positioning.

54. The terminal device of any one of claims 48 to 53, wherein the first positioning request of the electronic tag further carries an identification of the terminal device.

55. The terminal device of any one of claims 47 to 54, further comprising:
a first reception module configured to receive the first positioning request of the electronic tag from a first network device.

56. The terminal device of claim 55, further comprising:
a first transmission module configured to transmit a first positioning response of the electronic tag to the first network device, the first positioning response carrying the position of the electronic tag.

57. The terminal device of any one of claims 47 to 56, wherein the first network device comprises a location management function (LMF).

58. The terminal device of any one of claims 47 to 57, wherein the electronic tag comprises at least one of a radio frequency identification (RFID) tag, a passive internet of things (IoT) device tag and an ambient IoT tag.

59. A network device comprising:
a second acquisition module configured to acquire a position of an electronic tag according to a first positioning response of the electronic tag.

60. The network device of claim 59, wherein the first positioning response of the electronic tag carries a relative position of the electronic tag relative to a terminal device and/or an absolute position of the electronic tag.

61. The network device of claim 60, wherein the second acquisition module is configured to determine the absolute position of the electronic tag by using the relative position and an absolute position of the terminal device.

62. The network device of any one of claims 59 to 61, further comprising:
a second transmission module configured to transmit a first positioning request of the electronic tag to a terminal device, the first positioning request carrying at least one of an identification of the electronic tag and an identification of a terminal device associated with the electronic tag; and
a second reception module configured to receive the first positioning response of the electronic tag from the terminal device.

63. The network device of claim 62, wherein the first positioning response of the electronic tag carries at least one of the identification of the electronic tag and the identification of the terminal device associated with the electronic tag.

64. The network device of any one of claims 59 to 63, further comprising:
a position transmission module configured to transmit the position of the electronic tag.

65. The network device of any one of claims 59 to 64, wherein the network device comprises a location management function (LMF).

66. The network device of any one of claims 59 to 65, wherein the electronic tag comprises at least one of a radio frequency identification (RFID) tag, a passive internet of things (IoT) device tag and an ambient IoT tag.

67. A network device, comprising:
a verification module configured to verify an electronic tag and/or a terminal device associated with the electronic tag according to a second positioning request of the electronic tag.

68. The network device of claim 67, wherein the verification module is configured to verify whether the electronic tag and/or the terminal device associated with the electronic tag allows to open up the position information of the electronic tag to a third party.

69. The network device of claim 67 or 68, wherein the verification module interacts with a third network device to verify the electronic tag.

70. The network device of claim 69, further comprising:
a third acquisition module configured to acquire information of the terminal device associated with the electronic tag from a fourth network device, in case that the electronic tag allows to open up the position information to a third party; and
a third transmission module configured to transmit a third positioning request of the electronic tag according to the information of the terminal device associated with the electronic tag.

71. The network device of claim 67 or 68, wherein the verification module interacts with a third network device to verify the terminal device associated with the electronic tag.

72. The network device of claim 71, further comprising:
a fourth acquisition module configured to acquire information of the terminal device associated with the electronic tag from a fourth network device.

73. The network device of claim 70 or 72, wherein the acquiring information of the terminal device associated with the electronic tag from a fourth network device comprises:
sending a query request to the fourth network device, the query request carrying an identification of the electronic tag; and
receiving a query response from the fourth network device, the query response carrying an identification of the terminal device associated with the electronic tag.

74. The network device of claim 73, wherein the query response further carries the identification of the electronic tag.

75. The network device of any one of claims 67 to 74, further comprising:
a third reception module configured to receive a second positioning request of the electronic tag from a fifth network device.

76. The network device of claim 75, wherein the fifth network device comprises a network exposure function (NEF).

77. The network device of claim 75, wherein the fifth network device comprises an application function (AF).

78. The network device of claim 77, further comprising: an authorization module configured to determine whether the AF is allowed to request position information.

79. The network device of any one of claims 67 to 78, wherein the second positioning request of the electronic tag carries an identification of the electronic tag.

80. The network device of claim 70, wherein the third positioning request of the electronic tag carries at least one of the identification of the electronic tag and an identification of a terminal device associated with the electronic tag.

81. The network device of any one of claims 67 to 80, wherein the network device comprises a gateway mobile location center (GMLC).

82. The network device of any one of claims 69 to 74, wherein the third network device comprises a unified data management (UDM).

83. The network device according to claim 70, 72 or 73, wherein the fourth network device comprises a network function (NF), the NF storing an association relationship between the terminal device and the electronic tag.

84. The network device of any one of claims 67 to 83, wherein the electronic tag comprises at least one of a radio frequency identification (RFID) tag, a passive internet of things (IoT) device tag and an ambient IoT tag.

85. A network device comprising:
a fourth reception module configured to receive a second positioning response of an electronic tag from a first network device, the second positioning response carrying a position of the electronic tag; and
a fourth transmission module configured to transmit a third positioning response of the electronic tag to a second network device, the third positioning response carrying the position of the electronic tag.

86. The network device of claim 85, wherein the second position response further carries at least one of an identification of the electronic tag and an identification of a terminal device associated with the electronic tag.

87. The network device of claim 85, wherein the third positioning response further carries at least one of an identification of the electronic tag and an identification of a terminal device associated with the electronic tag.

88. The network device of any one of claims 85 to 87, further comprising:
a fifth reception module configured to receive a third positioning request of the electronic tag from the second network device, the third positioning request carrying at least one of an identification of the electronic tag and an identification of a terminal device associated with the electronic tag; and
a fifth transmission module configured to transmit a fourth positioning request of the electronic tag to the first network device, the fourth positioning request carrying at least one of the identification of the electronic tag and the identification of the terminal device associated with the electronic tag.

89. The network device of any one of claims 85 to 88, wherein the second network device comprises a gateway mobile position center (GMLC).

90. The network device of any one of claims 85 to 89, wherein the first network device comprises a location management function (LMF).

91. The network device of any one of claims 85 to 90, wherein the network device comprises an access and mobility management function (AMF).

92. The network device of any one of claims 85 to 91, wherein the electronic tag comprises at least one of a radio frequency identification (RFID) tag, a passive internet of things (IoT) device tag and an ambient IoT tag.

93. A communication device comprising a processor, a memory for storing a computer program, and a transceiver, wherein the processor is configured for invoking and executing the computer program stored in the memory and controlling the transceiver to perform the method of any one of claims 1 to 12, 13 to 20, 21 to 38, or 39 to 46.

94. A chip comprising a processor for invoking and executing a computer program from a memory to enable a device on which the chip is mounted to perform the method of any one of claims 1 to 12, 13 to 20, 21 to 38, or 39 to 46.

95. A computer-readable storage medium for storing a computer program that causes a computer to perform the method of any one of claims 1 to 12, 13 to 20, 21 to 38, or 39 to 46.

96. A computer program product comprising computer program instructions that cause a computer to perform the method of any one of claims 1 to 12, 13 to 20, 21 to 38, or 39 to 46.

97. A computer program that causes a computer to perform the method of any one of claims 1 to 12, 13 to 20, 21 to 38, or 39 to 46.
